# EUROPEAN PATENT APPLICATION

(11) **EP 3 065 369 A1**
(43) Date of publication of application: **07.09.2016**
(21) Application number: 15382095.6
(22) Date of filing: 04.03.2015
(51) Int. Cl.: H04L 29/06

(54) **Method and system for automatically authorizing communications based on location**

(71) Applicant: Telefonica Digital España, S.L.U., 28013 Madrid (ES)
(72) Inventor: Neystadt, John (Eugene), 28013 Madrid (ES); Small, Ian, 28013 Madrid (ES); Cardineau, Fabien, 28013 Madrid (ES)
(74) Representative: Carpintero Lopez, Francisco

(57) **Abstract**

Present invention refers to a method for automatically authorizing a user for conducting a set of actions through a first communication device. The method comprises: receiving, by a first server, status information of the first communication device and a second communication devices carried by the user, wherein the status information comprises information of location and availability; determining whether the first and second communication devices are within a preconfigured distance; sending a notification to the first communication device; requesting, by the first communication device as a result of receiving the notification message, authorization information to a second server; sending, from the second server to the first communication device, authorization information of actions previously authorized by the user for the first communication device; and conducting, by the first communication device, the authorized set of actions.

## Description

### TECHNICAL FIELD OF THE INVENTION

Present invention generally relates to authentication and authorization methods and systems and more specifically to actions automatically conducted through communication devices based on users' location.

### BACKGROUND OF THE INVENTION

Nowadays, people are surrounded by several communication devices, some of which are shared with other users. However, personal activities are often conducted by said shared devices, so a previous identification of the user is required. The process of identification is slow and tedious for the users, but it is essential to ensure user's privacy and so, it is assumed an explicit user sign-in into the communication device, prior to enabling the user to use this device for receive communications, such as calls and SMS's, initiating new communications or doing other authorized activity, such as social networking, accessing his photos in the cloud storage, etc.

With the appearance of always-turned-on SmartTV devices in homes and offices, users are willing to leverage them as communication terminals and taking advantage of the multiple VoIP applications available.

Prior art offer different solutions for authentication and/or authorization of communication devices by disclosing web pages or mobile applications programmed with easy interfaces, methods for managing communications after the user has already registered and some other solution to relieve the inevitable step of identifying the user, but in one way or another, they always require for an action of the user to proceed. Taking into account people mobility, it is quite inconvenient to constantly require users to actively log in into every communication device in proximity.

Therefore, existing proposals involve at least one disadvantage regarding user interaction. Prior art is then missing a solution to this problem, where user interactions are minimized and a seamlessly authentication/authorization method is provided for the user conducting certain personal actions from different communication devices in proximity.

### SUMMARY OF THE INVENTION

Present invention solves the aforementioned problems by a method for automatically authorizing a user for conducting a set of actions through a first communication device. The method comprises the steps of:
a) receiving, by a first server, status information of the first communication device, wherein the status information comprises information of location and availability of the first communication device;
b) receiving, by the first server, status information of a second communication device carried by the user, wherein the status information comprises information of location and availability of the second communication device;
c) determining, by the first server, whether the first and second communication devices are within a preconfigured distance, based on the status information provided in steps a) and b);
d) sending, by the first server, a notification message to the first communication device when the second communication device is within a preconfigured distance from the first communication device;
e) requesting, by the first communication device as a result of receiving the notification message, authorization information to a second server;
f) sending, from the second server to the first communication device, authorization information of actions previously authorized by the user for the first communication device;
g) conducting, by the first communication device, the authorized set of actions.

According to one particular embodiment, present invention may comprise an initial step of registering the first and the second communication devices in the second server.

Additionally, according to one particular embodiment of the invention, it is further comprised sending, by the first user, user's credentials from any of the first or the second communication device to the second server, and further authorizing, by the user the first communication device, to conduct a set of actions.

Additionally, present invention may comprise sending a authorization token , from the second server to the first communication device.

Additionally, present invention may comprise registering in a communication service, by the first communication device sending the authorization token to the communication service for initiating/receiving communications for the user.

In the case that an already registered second communication device is getting away from the first communication device, present invention may comprise the steps of:
- determining, by the first server, that the first and second communication devices are no longer within the preconfigured distance;
- sending a further message from the first server to the communication server requesting the communication server to unregister the first communication device

If a communication is already established by the second communication device when the first server determines that the first communication device is in proximity within a preconfigured distance, present invention may further comprise sending a notification message from the first server to the communication service when the second communication device is within a preconfigured distance from the first communication device; and then, sending a prompting message from the communication service to the second communication device prompting the user to transfer the ongoing communication to the first communication device.

After requesting, by the first communication device as a result of receiving the notification message, authorization information to a second server, it is possible that the first communication device is not previously authorized by the user, then, present invention may further comprise the following steps:
- sending a message, from the second server to the second communication device, prompting the user to authorize the first communication device;
- sending, by the user using the second communication device to the second server, authorization actions to be conducted for the first communication device.

When the user carrying the second communication device is getting away from the first communication device, present invention, according to a particular embodiment, may further comprise the following steps:
- determining, by the first server, that the first and second communication devices are no longer within the preconfigured distance;
- sending, by the first server, a message to the first communication device indicating to stop conducting any action for the user.

The information of location provided by any of the communication devices may comprise networks to which said communication devices are connected or accessible wireless networks.

Status information provided by the communication devices is provided, according to one particular embodiment of the invention, every configurable period of time. Alternatively, it is considered to provide the status information only when a communication device detects any change on location.

Preferably, the first communication device is a smart TV and the second communication device is a smartphone or any other mobile device.

A second aspect of the invention refers to a system for automatically authorizing a user for conducting a set of actions through a first communication device, characterized by comprising:
- the first communication device configured for providing status information to a first server comprising information of its location and its availability; requesting authorization information to an second server; and conducting the authorized set of actions;
- a second communication device configured for providing status information to the first server comprising information of its location and its availability;
- the first server configured for receiving status information of both the first communication device and the second communication device; determining whether the first and the second communication devices are within a preconfigured distance; and sending a notification message to the first communication device when the second communication device is within a preconfigured distance;
- the second server configured for sending to the first communication device, authorization information of actions previously authorized by the user for the first communication device.

The first server and the second server may be implemented, according to one embodiment of the invention, on a single node of a telecommunication network.

A final aspect of the invention refers to a computer program product comprising computer program code adapted to perform the method of the invention when said program code is executed on a computer, a digital signal processor, a field-programmable gate array, an application-specific integrated circuit, a micro-processor, a micro-controller, or any other form of programmable hardware.

In conclusion, present invention has an advantage in that the user is seamlessly authorized to perform user specific actions, such as communications on the SmartTV device, skipping the need to provide his credentials and explicit user interaction. Thus, the convenience of using SmartTV for personalized activity is highly increased. Moreover, the risk of leaving an open session after a communication using the SmartTV is limited by the configured allowed distance. If the user carrying the smartphone leaves the allowed distance from the SmartTV, the method unregister the device in order to avoid any further communication by a non-authorized third party.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a drawing wherein, by way of illustration and not restrictively, the following has been represented:
**Figure 1****.-** shows a basic architecture of present invention according to one particular embodiment.
**Figure 2****.-** shows a diagram with detailed flow of messages and communications according to one embodiment of the invention.
**Figure 3****.-** shows a particular embodiment of the invention, where a flow diagram is associated to the discovery of users in proximity of a non-mobile device.

### DETAILED DESCRIPTION OF THE INVENTION

The matters defined in this detailed description are provided to assist in a comprehensive understanding of the invention. Accordingly, those of ordinary skill in the art will recognize that variation changes and modifications of the embodiments described herein can be made without departing from the scope and spirit of the invention. Also, description of well-known functions and elements are omitted for clarity and conciseness.

Of course, the embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

Present invention discloses a method to pre-authorize user's usage of a communication device, for example a SmartTV device, when user's other communication device, for example a smart-phone, is located close to said SmartTV device.

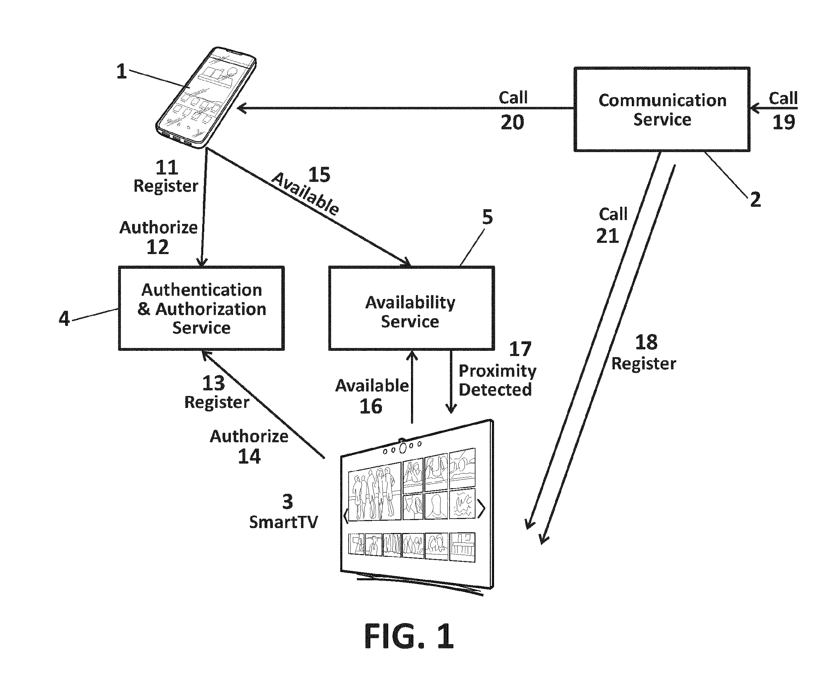

In **figure 1** it is shown a basic architecture of present invention according to one particular embodiment. A second user's communication device (1), such as a SmartPhone connected to the Internet, which is the device from which the user makes use of a Communication Service (2), which may encompass any combination of textual, voice, video or any other type of multimedia communications. The Communication Service rely on standard communication technologies as GSM, over-the-top communications over IP or combinations thereof. A first communication device (3), which can be a SmartTV or other type of device of similar characteristics, that is, a device that is not usually carried by the user but on the contrary is usually placed on a fixed location and that can be shared by multiple users, e.g. those users in a household. An Authentication / Authorization (AuthN/AuthZ) Service (4), which, according to different embodiments can be two separate services or single combined one that can authenticate a user, and once authenticated let it authorize another entity, to access certain resources or to execute certain actions on user's behalf, for example register to the Communication Service. An Availability Service (5), which keeps track of those devices that are active, that is devices which have registered their availability in the Availability Service (5), as well as other pieces of status information, such as the geographical location.

The Communication Service, according to one embodiment of the invention is implemented on a Communication server.

The Authentication / Authorization (AuthN/AuthZ) Service, according to different embodiments of the invention, is implemented on a single server or on two different server providing service for the Authentication service and Authorization service separately.

The Availability Service is implemented, according to one embodiment of the invention, on an availability server.

Communication server, AuthN/AuthZ server and/or Availablity Server are implemented, according to one particular embodiment of the invention, on a single node of a telecommunication network.

**Figure 1** discloses not only the elements of the system but also a basic scheme of the steps carried out. The user has to register himself (11) in the Authentication / Authorization (AuthN / AuthZ) Service to establish his identity in the service. It is done by means of any existing protocol, such as OAuth protocol. Identity establishment and creation of credentials can be done from any of user's devices, e.g. smartphone. In addition to creating user credentials, the user explicitly authorize (12) the device to be used for sending and receiving communications for him. The user registers (13) also the Smart TV into the AuthN/AuthZ Service for establishing the Smart TV's identity and creating a set of credentials. At a later point, the user authorizes (14) the SmartTV, in order to seamlessly use it for private activities, such as communication or social networking, by creating an authorization for the SmartTV to perform a particular set of actions on the user's behalf, for example to log in to the Communication Service whenever another user's device is located in the proximity. This authorization is implemented using any authorization protocol such as OAuth, in which the user explicitly authorizes the device (Smart TV) by interacting with the AuthN/AuthZ service after providing the necessary credentials. This process can be done by default from the Smart TV itself, but could also be done from any other device by providing an identifier of the to-be-authorized device.

When the communication devices (Smartphone or Smart TV) are turned on, they report (15,16) their positions to the Availability Service, in the form of geographical coordinates, or any other set of location-dependent context parameters as visible WiFi access point's BSSID, Cell-Tower they are connected on, or public IP in the network it is connected. According to different embodiments of the invention, the geographical coordinates are pre-configured (picked from a map by the user) or obtained from the location-dependent context parameters at the Smart TV itself or at other point in the system like the Availability Service. Availability Service detects (17) when a communication device, as user's smartphone, is in proximity of SmartTV. Then, Availability Service generates an event notifying SmartTV. Upon receiving of this event, SmartTV checks with the AuthN/AuthZ Service whether it is authorized to perform any action on user's behalf upon proximity of said communication device. Upon confirming that it is authorized to register (18) on user's behalf into Communication Service, it can do it seamlessly without user intervention and it allows the user to interact with the Communication Service using the SmartTV from that point onwards without the need of any further authentication. Optionally, if the SmartTV is in proximity, but it has not previously been authorized, Availability Service can send an event to SmartTV and/or other user's devices, like his SmartPhone, using push notifications to offer adding an authorization (11,12) for the discovered SmartTV.

According to a particular embodiment of the invention, the Communication Service discovers new authorizations by polling Availability Service and AuthZ Service or by receiving an event from them, and then, once user gets into its proximity during a communication (e.g. user is entering the office or a car and approaching SmartTV during the call), it is offered to him to hand-over the communication in-progress from the first communication device, as a smartphone, to a second authorized communication device, as the SmartTV,

Communications can be implemented using existing methods, such as VoIP using SIP protocol, so that after SmartTV is registered into the Communication Service, and it handles an incoming call (19), the call can be routed to one or more devices, from which user has been registered, including his regular mobile device (20) or the SmartTV (21), which registers on user's behalf.

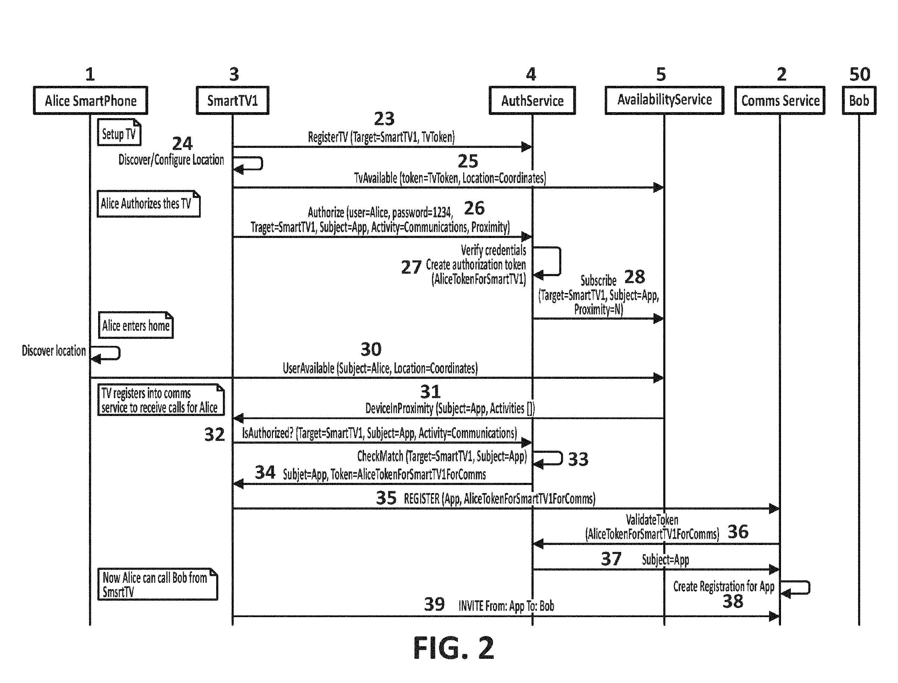

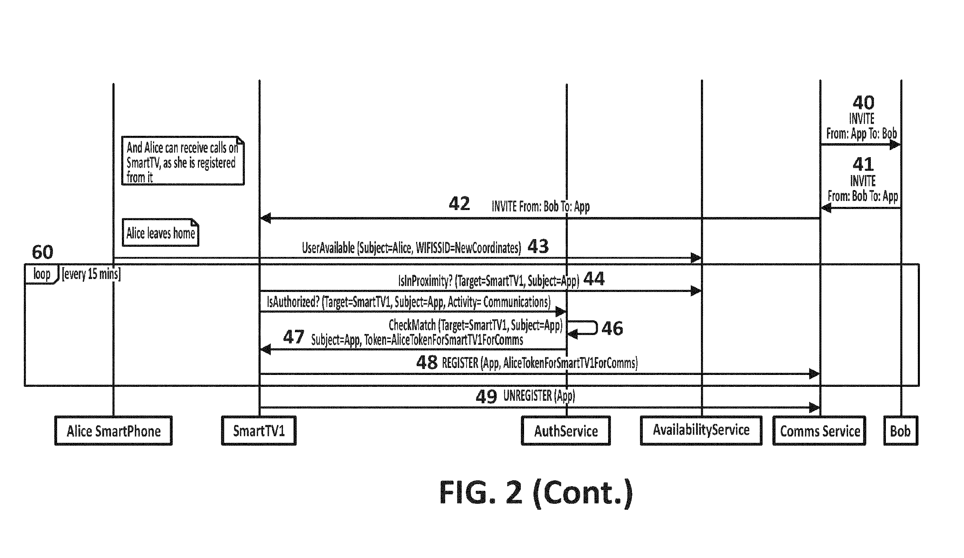

**Figure 2** shows a diagram with detailed flow of messages and communications according to one embodiment of the invention. The first step to be carried out by the user is setting up the devices which he want to be involved in his communications. As he is already using a mobile device carried with him, he also need to set up a non-mobile communication device, such as SmartTV, by registering (23) it with Authentication Service (4) and establishing an identity for the SmartTV. This can be done with a protocol, such as HTTP, LDAP, PKI (Public/Private Key infrastructure), Kerberos or any other protocol with similar features.

Then, the SmartTV is configured (24) with a location (by specifying its geographical coordinates or alternatively setting it to discover the location dynamically). In the dynamic location discovery mode, SmartTV will perform location discovery each time it connects to the network or with a configured periodic time interval (e.g. every 60 seconds). Location discovery can be based on different techniques depending on the features of the SmartTV, as GPS hardware or networks that the SmartTV can detect by querying a network location service passing information about available networks, such as list of WiFi network ids (BSSIDs) or Cell Tower ids, in case SmartTV has SIM and cellular network connection such as (On GSM, this is the Cell ID (CID); CDMA networks use the Base Station ID (BID) and WCDMA networks use the UTRAN/GERAN Cell Identity (UC-1d), which is a 32-bit value concatenating the Radio Network Controller (RNC) and Cell ID). Also an IP2Location service can be used for the SmartTV, if connected to public network or use protocol, such as STUN to discover its public IP address, in case it is connected behind NAT box. Then, each time SmartTV connects to the network, it reports (25) its availability to the Availability Service, sending its identity token and updated location coordinates.

Next, the user (who will be called Alice for this embodiment), who has already authenticate the SmartTV into the Authentication Service, authorizes (26) this SmartTV to perform specific activities, such as communications (registering to a communication service, social networking, access to his cloud photo albums, etc) for this user's identity, such as her MSISDN (phone number) or username, when the user is in proximity. Authorization can be done using protocol such as OAuth or an application specific protocol. As part of the authorization, a threshold for proximity can be configured, for example, 20 meters when the user is at home or 100 meters when the user is at the office. Authorization Service validates (27) user and SmartTV identities, by verifying provided credentials, and stores pertinent authorizations. Authorizations can optionally include expiration time (e.g. valid for 1 month only) as a security measure. In addition Authorization Service requests (28) the Availability Service to create a subscription, so that the SmartTV will be notified when Alice's Smartphone is in proximity, provided that Alice's Smartphone discover its location (29) and reports (30) its availability to the Availability Service. User's smartphone discovers user location either when it connects to a new network, by checking its location every configurable interval (e.g. 5 minutes), or when new authorization is created according to step 26. User availability is then reported (30) to Availability Service, including user's identity token (previously obtained from Authentication Service), his current location coordinates and list of authorized activities for this device.

In the case of a user wants to de-authorize a communication device, a request to the Authorization Service has to be sent from any of the user's registered devices. Then, the Authorization Service sends a request to the Availability Service to remove the subscription to proximity.

When new locations are received (either from the SmartTV or the user) by the Availability Service, it is checked whether an authorization exists within a preconfigured distance. Checking can be run via database query, but in the case of a very large system comprising a number of users and SmartTV devices very large, a parallelization of the checking needs to be done, which can be based on a map/reduce type of processing, such as Hadoop. The criteria to parallelize the checking are based on location and distance. If an authorized pair of smartphone and SmartTV within a preconfigured distance is detected, the Availability Service generates and sends (31) an event to the SmartTV to notify detection of a match. Said event includes a user's identity (such as MSISDN) in one of the embodiments.

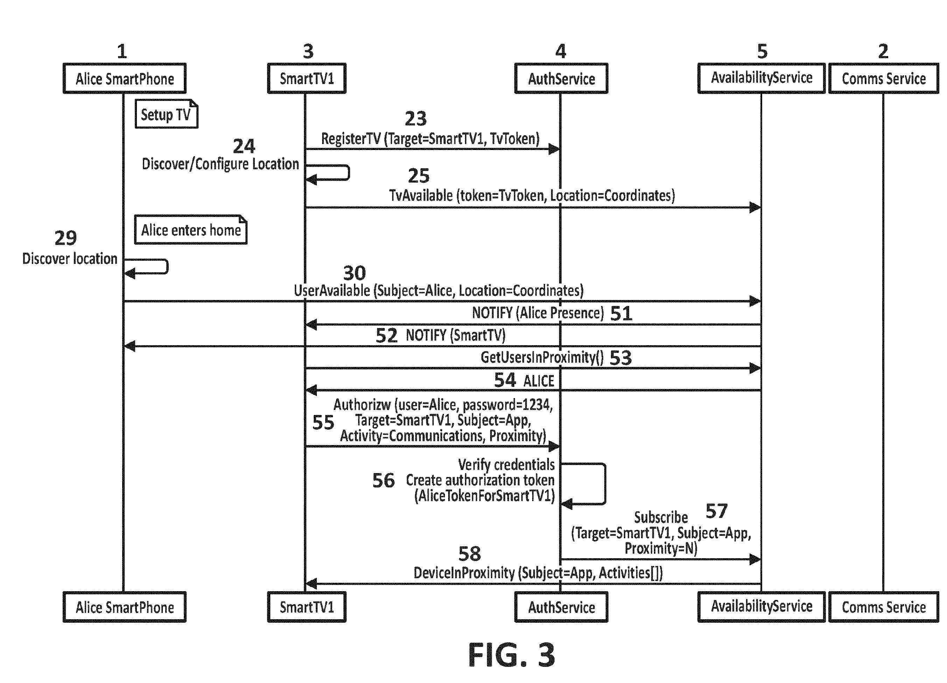

Optionally if proximity is detected, but authorization does not exist, notification event is sent to the user via push notification or via another protocol or proprietary means to user's smartphone in order to prompt the user to authorize the nearby communication device (preferably a SmartTV) to handle his communications. If the user accepts, this authorization sequence is initiated as described above and can be seen in more detail in **Figure 3****.**

After receiving the event, the SmartTV still needs to obtain user's credentials to register into a Communication Service. Then, a query is sent (32) from the SmartTV to the Authorization Service comprising SmartTV credentials and user's identity (such as MSISDN or username). Authorization Service checks (33) whether the user has previously authorized this SmartTV to handle a particular activity (such as communications). Then, it generates and sends back (34) an authorization token for this particular activity. The SmartTV registers (35) into the Communication Service using said authorization token. Registration can be done using one of existing authentication protocols that supports authorization tokens, including SIP extension for OAuth or other application protocol, such as OAuth or SAML for HTTP. Communication Service validates (36) the received token against the Authorization Service and confirms its validity, obtaining (37) the identity of the Requested Address of the Record (AOR), establishing the registration (38) for this AOR (Alice).

Once the SmartTV has been registered into the Communication Service on user's behalf, it can handle specific user's operations, such as allowing him to call (39, 40) a second user (50), receiving calls (41, 42), browser photos or receiving push notifications on the user's behalf. This activity can be done using protocol such as SIP or XMPP for communications such as calls or messages, or using other protocols for different application user cases.

Given that according to the preferred embodiment of the invention, registration into Communication Service needs to be repeated every configurable interval (60), for example every 15 minutes, the SmartTV runs a timer every said configurable interval and checks (44) with the Availability Service whether Alice is still in proximity within the configurable distance. If Alice stays within the configurable distance, the SmartTV ask for (45) a new token to the Authentication Service. As a response, the Authentication Service checks (46) that Alice has not de-authorized the SmartTV and provides (47) a new token back to the SmartTV. After that, the SmartTV sends (48) a RE-REGISTER message using signaling protocol, such as SIP, to the Communication Service with the new token.

Alice's device periodically updates the Availability Service on her location (43), so, when she leaves home, the Availability Service learns that she is no longer in proximity and it sends an event to the SmartTV notifying that Alice is no longer within the configurable distance. Then the SmartTV sends (49) an UNREGISTER message to the Communication Service. Optionally, the Availability Service could send an UNREGISTER message to the Communication Service directly, identifying Alice as Subject and her Device, without waiting for the SmartTV to handle it. This alternative embodiment has the advantage of preventing an ability to initiate or receive communications on user's name from the active signaling session on SmartTV.

**Figure 3** shows a particular embodiment of the invention, where a flow diagram is associated to the discovery of users in proximity of a non-mobile device, preferably a SmartTV (3). The SmartTV is registered (23), has already discovered its location (24) and has reported (25) said location to the Availability Service (5). The user Alice (1) enters a location (29), which could be his home, and reports (30) said location to the Availability Service, as it also described in the flow of figure 2.

When the Availability Service discovers that no Alice subscription exists for this SmartTV, it notifies (51) the SmartTV that a new compatible SmartPhone is in proximity within a configurable distance. Furthermore the Availability Service sends a message (52) to Alice's smartphone notifying that a SmartTV is in proximity. Alternatively, according to one embodiment of the invention, Alice discovers her smartphone to the SmartTV by sending a query from the SmartTV (53) to the Availability Service to show all communication devices in proximity (54). After discovery by any of the previous procedures, Alice can authorize (55) the SmartTV for communications or any other specific activity on her behalf. The authorization is identical to the one described before in figure 2, so that Alice provides her credentials, a required distance to be considered as "proximity" (e.g. 10 meters), and activity type (e.g. "communications") and the authorization is created by the Authorization Service (4), provided that her credentials have been verified (56). Authorization Service sends a message to the Availability Service to request a subscription (57) for Alice getting into proximity of the SmartTV. As Alice is already in its proximity, an event for a "Device In Proximity" is triggered (58) allowing the SmartTV to perform activities on Alice's behalf, such as registering into the Communication Service (2).

## Claims

1. Method for automatically authorizing (18) a user for conducting a set of actions through a first communication device (3), **characterized by** comprising the following steps:
a) receiving (16), by a first server (5), status information of the first communication device, wherein the status information comprises information of location and availability of the first communication device;
b) receiving (15), by the first server, status information of a second communication device (1) carried by the user, wherein the status information comprises information of location and availability of the second communication device;
c) determining, by the first server, whether the first and second communication devices are within a preconfigured distance, based on the status information provided in steps a) and b);
d) sending (17), by the first server, a notification message to the first communication device when the second communication device is within a preconfigured distance from the first communication device;
e) requesting (14), by the first communication device as a result of receiving the notification message, authorization information to a second server (4);
f) sending, from the second server to the first communication device, authorization information of actions previously authorized by the user for the first communication device;
g) conducting (18), by the first communication device, the authorized set of actions.

2. Method according to claim 1 further comprising an initial step of registering the first and the second communication devices into the second server.

3. Method according to any one of the previous claim further comprising sending, by the user, user's credentials from any of the first or the second communication device to the second server, and further authorizing, by the user, the first communication device to conduct a set of actions.

4. Method according to claim 3 further comprising sending an authorization token, from the second server to the first communication device.

5. Method according to claim 4 further comprising registering in a communication service, by the first communication device sending the authorization token to the communication service for initiating/receiving communications for the user.

6. Method according to claim 5 wherein the second communication device is getting away from the first communication device, further comprising the following steps:
- determining, by the first server, that the first and second communication devices are no longer within the preconfigured distance;
- sending a further message, from the first server to the communication server, requesting the communication server to unregister the first communication device.

7. Method according to claim 5, wherein determination of step c) is done during an ongoing communication of the second communication device, further comprising:
- sending a notification message from the first server to the communication service when the second communication device is within a preconfigured distance from the first communication device;
- sending a prompting message from the communication service to the second communication device prompting the user to transfer the ongoing communication to the first communication device.

8. Method according to any one of previous claims, wherein, after step e), the first communication device is not previously authorized by the user, further comprising:
- sending a message, from the second server to the second communication device, prompting the user to authorize the first communication device;
- sending, by the user using the second communication device to the second server, authorized actions to be conducted for the first communication device.

9. Method according to any one of the previous claims wherein the second communication device is getting away from the first communication device, further comprising the following steps:
- determining, by the first server, that the first and second communication devices are no longer within the preconfigured distance;
- sending, by the first server, a message to the first communication device indicating to stop conducting any action for the user.

10. Method according to any one of previous claims wherein the information of location of any of the communication devices comprises networks to which said communication devices are connected or accessible wireless networks.

11. Method according to any of the previous claims wherein steps a) and b) are provided to the first server every configurable period of time.

12. Method according to any one of the previous claims wherein the first communication device is a smart TV and the second communication device is a smartphone or any other mobile device.

13. System for automatically authorizing a user for conducting a set of actions through a first communication device, **characterized by** comprising:
- the first communication device configured for providing status information to a first server comprising information of its location and its availability; requesting authorization information to an second server; and conducting the authorized set of actions;
- a second communication device configured for providing status information to the first server comprising information of its location and its availability;
- the first server configured for receiving status information of both the first communication device and the second communication device; determining whether the first and the second communication devices are within a preconfigured distance; and sending a notification message to the first communication device when the second communication device is within a preconfigured distance;
- the second server configured for sending to the first communication device, authorization information of actions previously authorized by the user for the first communication device.

14. System according to claim 14 wherein the first server and the second server are implemented on a single node of a telecommunication network.

15. Computer program product comprising computer program code adapted to perform the method according to any of the claims 1-12 when said program code is executed on a computer, a digital signal processor, a field-programmable gate array, an application-specific integrated circuit, a micro-processor, a micro-controller, or any other form of programmable hardware.
